Europäisches Patentamt

(19) European Patent Office

Office européen des brevets

(11) Publication number: **0 122 987**
**B1**

(12) EUROPEAN PATENT SPECIFICATION

(45) Date of publication of patent specification: 30.12.86   (51) Int. Cl.⁴: **F 16 L 37/28**

(21) Application number: **83302313.8**

(22) Date of filing: **22.04.83**

(54) **Ball valve coupling.**

(43) Date of publication of application:
31.10.84 Bulletin 84/44

(45) Publication of the grant of the patent:
30.12.86 Bulletin 86/52

(84) Designated Contracting States:
DE FR GB

(56) References cited:
DE-C- 737 545
DE-C-1 054 792
DE-C-1 131 472
US-A-3 159 180
US-A-3 276 474
US-A-3 382 892

(73) Proprietor: AEROQUIP AG
Bahnhofstrasse 17
Zug (CH)

(72) Inventor: Allread, Alan R.
502 McBride
Jackson Michigan 49201 (US)

(74) Representative: Williams, Trevor John et al
J.A. KEMP & CO. 14 South Square Gray's Inn
London WC1R 5EU (GB)

# Description

Fluid couplings, such as the type commonly used on the ends of flexible hose to selectively connect and disconnect the hose to complete a fluid flow circuit often utilize valves within the couplings to close the coupling to fluid flow prior to disconnection.

Valved fluid couplings may be of the "self-sealing" type wherein valve structure of the coupling fitting automatically closes and opens upon the coupling being disconnected, and coupled, respectively. The most common type of self-sealing valve structure includes axially movable valve components, such as a sleeve or poppet valve wherein relative axial movement between the coupling halves during coupling and uncoupling is utilized to displace the valve structure. As sleeve and poppet type valves usually include ports and flow passages requiring the fluid flow to be transverse, usually perpendicular, to the axis of the coupling passage, such valves produce significant pressure loss within the fluid passing through the coupling, and also produce turbulence and other undesirable characteristics.

Couplings utilizing ball valves have not been widely used in view of several manufacturing and operating deficiencies. While ball valves utilizing a fluid flow bore of a diameter substantially equal to the coupling passage create little flow resistance, prior coupling constructions are unduly large. Further, while a ball valve only need rotate 90° between its full open and full closed positions its operating characteristics do not readily lend themselves to automatic self-sealing operation. Manual control of the ball valves must be coordinated with the state of the inter-connection between the coupling halves, and prior art couplings have not successfully combined with high flow capacity, low flow resistance advantages of ball valves with concise coupling construction and safety features which minimize leakage during uncoupling and coupling, and operation.

It is an object of the invention to provide a coupling utilizing a ball valve wherein the high capacity, low flow resistance characteristics of ball valves are utilized to the maximum, and yet, spillage and leakage of the fluid being carried is minimized.

Another object of the invention is to provide a fluid coupling utilizing a ball valve wherein opening of the valve is prevented until a full coupling connection has been made, and uncoupling cannot occur until the ball valve has been shifted to its closed position.

A further object of the invention is to provide a coupling having identical halves wherein each half is provided with a ball valve, and the ball valve of each half cannot be opened until the halves are fully coupled, and the coupled halves cannot be uncoupled until both ball valves have been fully closed.

Another object of the invention is to provide a fluid coupling utilizing ball valves wherein fluid leakage during uncoupling is minimized.

In the practice of the invention coupling halves are employed each having a passage, at least one of which receives a rotatable ball valve having a diametrical bore substantially equal to the coupling passage. The ball valve is rotatable 90° between fully open and fully closed positions, and valve positioning is through an actuator which includes an exteriorly accessible manually operated handle. While only one coupling half may be valved, the most common embodiment uses identical coupling halves each valved, and such a coupling is hereinafter described.

The prior art portion of claim 1 relates to a coupling as disclosed in DE—C—1131472. This prior coupling is rather cumbersome and complicated in construction with the ball valves being rotatable in response to coupling action between the two coupling parts. The two coupling parts are of different constructions with a substantial space being left between the two ball valves from which liquid will spill upon uncoupling.

The present invention is characterized as set out in the characterizing portion of claim 1. With this construction the ball valve must be fully closed before uncoupling can commence, both coupling halves can be identical, the construction is simple and reliable, with it being possible to minimise waste space for spillage between the ball valve and the end of the couplings and there is no difficulty in avoiding leakage during coupling in that the parts must be fully connected before opening of the ball valve can be commenced.

The coupling halves in the preferred construction are interconnected by axially extending headed projections received within complementary shaped lipped recesses, both of arcuate form and concentrically related to the axes of the coupling halves. Reception of the projections into the recesses, and relative rotation of the coupling halves about their longitudinal axes, interlocks the coupling halves with bayonet type connections and a predetermined relative rotation between the coupling halves must be achieved to produce a fully coupled relationship.

Each coupling half is provided with the first locking means being in the form of an axially displaceable detent pin operated by a cam surface defined on the associated valve actuator. Rotation of the valve from the closed to the open position causes the detent pin to axially extend from a sealing surface defined on the coupling end which is received within a recess defined within the opposed coupling half only if the coupling halves are fully interconnected. Thus, the locking pin detent of one coupling half must be aligned with a locking recess within the other coupling half in order to permit rotation of the ball valves from the closed to the open positions, thereby preventing inadvertent leakage in the event the valves could be opened prior to being fully coupled.

Conversely, the locking means prevents the coupling halves from being disconnected from each other until the ball valves have been rotated to the fully closed positions.

The sealing surface defined at the coupling end of the halves is substantially tangential to the spherical exterior surface of the associated ball valve wherein the volume of the void within the coupling passage between the ball valve and the sealing surface is minimized, reducing the volume of fluid which may escape during uncoupling of the halves.

As the bore of the ball valves is of a diameter substantially equal to the passage diameter through the coupling halves only negligible resistance is created in the coupling halves by the valve stucture, and valves manufactured in accord with the inventive concept permit maximum fluid flow with minimum pressure loss characteristics for a given coupling size.

The aforementioned objects and advantages of the invention will be appreciated from the following description and accompanying drawings wherein:

Fig. 1 is a top plan view of the coupling half in accord with the invention,

Fig. 2 is an end elevational view of the coupling half of Fig. 1 as taken from the left end thereof,

Fig. 3 is an elevational, diametrical, sectional view of a coupling half as taken along Section III—III of Fig. 1, the ball valve being in the closed position, and

Fig. 4 is an elevational, diametrical, sectional view taken through a coupling in accord with the invention wherein identical coupling halves are interconnected and the ball valves have been rotated to the fully open position.

A coupling fitting in accord with the invention includes an annular body 10 having a conduit connection end 12, and a coupling end 14. The body 10 includes a passage 16 which intersects the ends, and an annular valve seat is defined within the passage concentric thereto by spherical surface 18, and a seal ring 20.

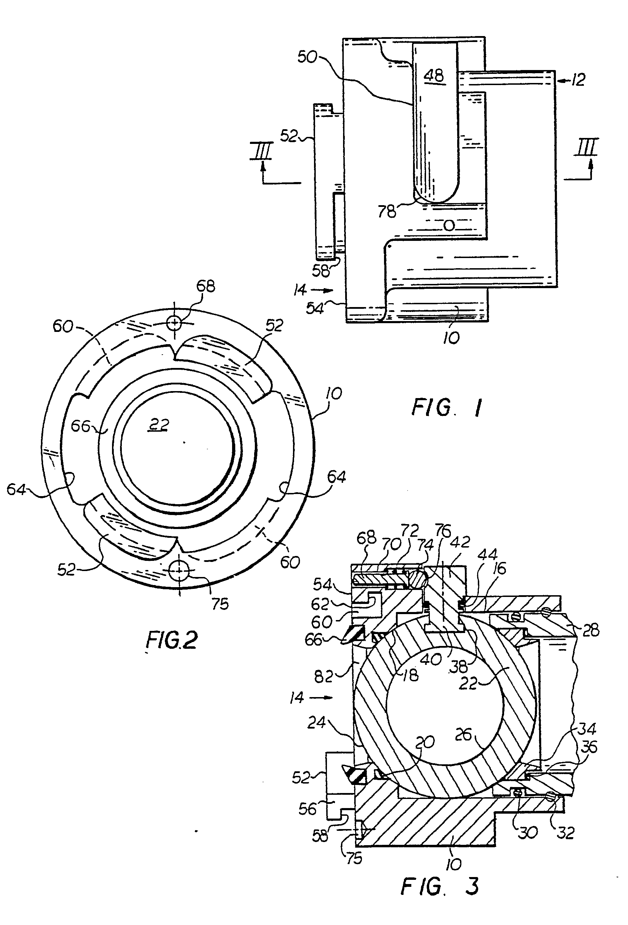

A ball valve 22 is rotatably mounted within the passage 16 and includes a spherical exterior surface 24 and a diametrical bore 26 which extends therethrough. As will be appreciated from Fig. 3, the valve seat spherical surface 18 and seal 20 engages the ball valve surface.

An annular adapter extension 28, which may be mounted upon a hose, or other conduit component of the fluid circuit, not shown, extends into the passage 16 and is sealed with respect thereto by O-ring 30. The adapter 28 is maintained within body 10 by a drive wire 32 received within aligned grooves wherein rotation of the body relative to the adapter is possible. An annular bearing 34 is slidably mounted within extension 28 and includes a spherical surface which engages the ball valve surface 24 and a wave washer 36 interposed between radial surfaces defined upon the extension 28 and bearing 34 biases the bearing and ball valve toward the left, Fig. 3, to assure a firm sealing engagement between the exterior surface of the ball valve and the valve seat seal 20.

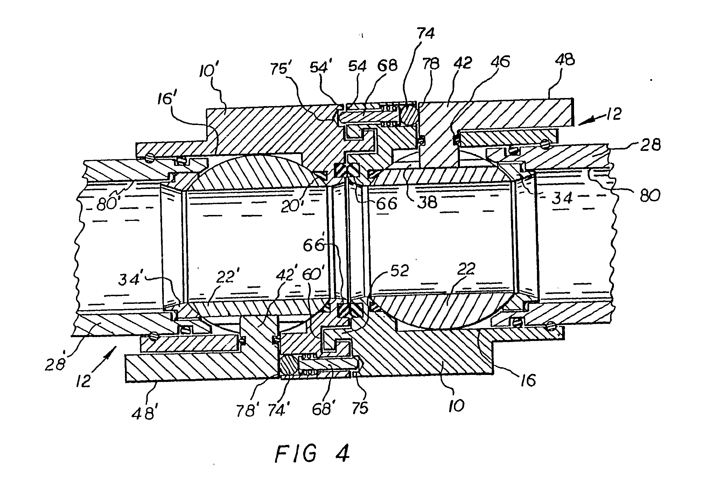

A T-slot 38, Fig. 3, is defined in the ball valve 22 and receives the T-shaped head 40 of the ball valve actuator 42. The actuator 42 extends through a bore 44 defined in the wall of the body 10 and is sealed with respect thereto by seal 46. The actuator includes a handle portion 48 disposed adjacent the exterior surface of the body 10 as to be exteriorly accessible, and rotation of the handle 48 from the position shown in Fig. 3 where the handle is against body stop surface 50 90° clockwise to the position shown in Fig. 4 will rotate the ball valve 22 from the closed condition of Fig. 3 wherein the bore 26 is disposed at 90° to the axis of the fitting passage 16, to the open position of Fig. 4 when the bore 26 is coaxially aligned with the axis of the fitting body to permit unrestricted fluid flow through the body.

The connection structure utilized with the coupling of the invention includes a pair of arcuate projections 52 extending from the body flat sealing surface 54 defined at the coupling end 14 of the body perpendicular to the axis of body 10. The projections 52 include a head or knob 56, defining a radial surface 58, for cooperation with a complementary groove, as described below.

The body 10 is also provided with a pair of annular lipped grooves 60 of arcuate form defined in surface 54 which include a lip defining radial surface 62, Fig. 3, and the grooves 60 each include an enlarged access opening 64, Fig. 2. The projections 52, and the grooves 60, are concentrically related to the axis of the associated fitting body, and as will be appreciated from Fig. 2, the enlarged access openings 64 defined within the body end 14 are capable of receiving the enlarged heads 56 of the projections of a coupling body to be connected to the body 10.

An annular elastomeric lip seal 66 is mounted within the body at the coupling end, and intersects the sealing surface 54, as will be appreciated from Fig. 3.

A detent pin 68 is slidably mounted within a bore 70 defined in body 10 for movement in a direction parallel to the longitudinal axis of the body. The detent pin 68 provided with an enlarged head against which compression spring 72 bears to bias the detent pin away from the sealing surface 54 intersected by bore 70. A ball 74 engages the headed end of pin 68, and the spring will continually bias the pin and ball toward the ball valve actuator 42. Also, a recess 75 is defined in surface 54 diametrically opposite to pin 68 and the same radial distance from the axis of body 10. The recess 75 is of a diameter slightly larger than that of pin 68.

The actuator 42 is provided with a recess 76 which aligns with the ball 74 upon the ball valve 22 being rotated to the closed position shown in Figs. 1 and 3. This alignment permits the ball 74 to be received within the recess 76 permitting the detent pin 68 to be fully retracted to the position of Fig. 3 "behind" the sealing surface 54. The recess 76, and adjacent cylindrical surface 78 of the actuator 42, constitutes a cam which controls the position of the detent pin.

In utilizing the fitting of Figs. 1—3 it is not necessary that the interconnected coupling parts both be halved, it is only necessary that both coupling parts include projections 52 and grooves 60. However, in most cases both coupling halves will be valved and Fig. 4 illustrates a typical complete coupling utilizing the described coupling parts. The coupling halves are identical in all respects, and for this reason identical reference numerals are employed on both halves, and primes are used to designate the components of the left coupling half. In Fig. 4 the adapter 28 is shown to a slightly greater extent than in Figs. 1—3, and the adapter includes a bore 80 and may constitute metal components mounted upon the ends of flexible hose, or one adapter may be associated with flexible hose, while the other adapter is connected to a tank or other "fixed" conduit fitting.

To connect the coupling bodies 10 and 10' the axes of the passages of the bodies are aligned, and are rotated relative to each other such that the headed projections 52 align with the access openings 64' of body 10', and the projections 52' of body 10' align with the access openings 64 of body 10. Upon this alignment being achieved the bodies 10 and 10' are axially moved toward each other and rotated relative to each other causing the projection surfaces 58 and 58' to engage the groove surfaces 62 and 62' and rotation of the coupling halves continues until the projection heads engage the "ends" of the grooves 60 and 60'. The radial surfaces 58 and 62 may be inclined in a light helical configuration to "draw" the body sealing surfaces 54 toward each other during this relative rotation connecting the coupling halves. As appreciated from Fig. 4, the seals 66 and 66' will engage, and be deformed during coupling, producing a fluid tight seal between the coupling halves.

Upon the relative rotation between the bodies 10 and 10' being fully completed the detent pins 68 and 68' will be in axial alignment with the recesses 75 and 75' and this alignment only occurs upon the coupling halves being fully coupled. Thereupon, the handles 48 and 48' may be rotated 90° to open the ball valves 22 and 22', and open the coupling to fluid flow therethrough.

Opening of the ball valves is permitted due to the alignment of the recesses 75 and 75' with the detent pins 68 and 68' since rotation of the handles will cause the balls 74 and 74' to ride out of the actuator recesses 76 and 76' and cause the outer ends of the detents to axially project beyond their associated sealing surface 54, and into the opposed recess in the other body. Such displacement of the detent pin permits the balls to rotatably or slidably engage the aligned cylindrical surface 78 of the actuator, and manual rotation of the ball valves is readily produced.

Should the coupling bodies 10 and 10' not be fully connected when it is attempted to open the ball valves, rotation of the handles 48 and 48', valve actuators and associated ball valves is prevented due to the fact that the detent pins 68 and 68' will engage the opposed body seal surface 54 and 54' and not permit the detent balls 74 and 74' to "ride" out of the actuator cam recesses 76 and 76'. Alignment of the recesses 76 and 76' with the detent pins 68 and 68' only occurs upon sufficient relative rotation between the coupling bodies to produce full coupling, and any rotation less than that necessary to fully couple the halves will prevent the ball valves from being manually opened.

It will also be appreciated that when even one of the ball valves 22 is open, while the bodies 10 and 10' are fully coupled, that it is not possible to uncouple the bodies. The presence of one detent pin 68 within a recess 75 will prevent relative rotation between the coupling bodies, and hence, both of the ball valves 22 must be rotated to the fully closed position permitting the detent pins to fully retract before the coupling bodies can be disconnected from each other by relative rotation. Disconnection occurs when relative rotation between the coupling bodies aligns the projections 52 with the access opening 64 and the bodies may be separated.

As will be appreciated from Fig. 3, the ball valve 22 is located within the body 10 such that the plane of the sealing surface 54 is substantially tangential to the spherical ball valve surface 24. This relationship minimizes the volume of the annular passage void 82 between the ball valve surface and sealing surface 54, thereby minimizing the amount of fluid which will be lost upon the ball valves being closed and the coupling bodies being disconnected.

As the diameter of the ball valve bore 26 is substantially equal to the diameter of the flow passage 16 through the coupling, and adapters, the ball valves produce little resistance to fluid flow, and do not create significant turbulence. The disclosed construction can be utilized with couplings of relatively small diameter, yet having excellent fluid flow characteristics, and the components can be fabricated with conventional techniques.

**Claims**

1. A coupling comprising, in combination, a first annular body (10) having a passage (16) defined therein having a longitudinal axis, said body having a conduit connection end for communicating with a conduit (28) and a coupling end, said passage communicating with said conduit connection and coupling ends, a ball valve (22) rotatably mounted within said passage, said ball valve including a spherical exterior surface (24) and a diametrical bore (26) extending through said valve, a valve actuator (42) attached to said ball valve extending through said body for selectively rotating said ball valve between an open position wherein said bore is in alignment with said passage axis and a closed position wherein said bore is transversely disposed to said passage axis, an annular valve seat (20) within said passage concentric to said passage axis sealingly engaging said ball valve exterior surface, first coupling attachment means (52) defined upon said first body coupling end, a second annular body (10') having a passage (16') defined therein having a longitudinal axis, said second body having a conduit connection end for communicating with a conduit (28') and a coupling end, said second body passage communicating with said second body conduit connection and coupling ends, second coupling attachment means (52') defined upon said second body coupling end complementary in configuration to said first coupling attachment means (52) and connectable thereto to a fully coupled condition to align said passages of said first and second bodies, characterized in that the actuator (42) has a manually operated handle (48) accessible exteriorly of said body, first locking means (68) distinct from the coupling attachment means are provided on said first body and are operatively connected (at 74) to said valve actuator (42) for selective movement between first and second positions upon rotation of said ball valve between said open and closed positions, respectively, second locking means (75') distinct from the coupling attachment means are provided on said second body (10') and are arranged to be aligned with and to be able to receive said first locking means (68) upon said first and second coupling attachment means being in the fully coupled condition whereby said first locking means can be shifted from second position to said first position to permit said ball valve to be rotated from said closed position to said open position only upon said first and second bodies being fully coupled, said first body coupling end has a flat sealing surface (54) perpendicularly disposed to the axis of said first body passage, and said spherical valve exterior surface (24) is substantially tangential to said sealing surface (54) when said ball valve is in said closed position to minimize the volume of voids within said first body passage adjacent said sealing surface.

2. A coupling as claimed in claim 1, characterized in that annular seals (66, 66') are provided upon said coupling ends of said first and second bodies to engage each other upon said bodies being fully coupled.

3. A coupling as claimed in claim 1 or 2, characterized in that said first and second coupling attachment means each include an arcuate lipped groove (60) and an arcuate headed projection (56), the projection being adapted to extend into and to be rotated relative to the groove about the axis of said first body passage to provide a bayonet type connection.

4. A coupling as claimed in any preceding claim, characterized in that said first locking means comprises a detent pin (68) slidably supported upon said first body (10) to be movable in the axial direction of said first body passage for axial extension from said first body coupling end at said first position of said first locking means, and said second locking means comprises a recess (75') defined in said second body coupling end to receive said detent pin.

5. A coupling as claimed in claim 4, characterized by a cam surface (76) defined upon said valve actuator (42), said detent pin (68) being operatively associated with said cam surface whereby operation of said valve actuator by said handle (48) selectively positions said detent pin at its first and second positions.

6. A coupling as claimed in any preceding claim, characterized in that a second ball valve (22') is rotatably mounted within said passage (16') of said second body (10') and includes a spherical exterior surface and a diametrical bore extending therethrough, a valve actuator (42') attached to said second ball valve extends through said second body and has a manually operated handle (48') accessible exteriorly of said second body for selectively rotating said second ball valve between open and closed positions relative to said second body passage, an annular valve seat (20') within said second body passage sealingly engages said second ball valve exterior surface, third locking means (68') provided on said second body are operatively connected to said second ball valve actuator (42') for selective movement between first and second positions upon rotation of said second ball valve between said open and closed positions, respectively, and fourth locking means (75) provided upon said first body are adapted to be aligned with and to receive said third locking means upon said first and second coupling attachment means being in the fully coupled condition permitting said third locking means to be shifted from its second position to its first position to permit said second ball valve to be rotated from its closed position to its open position only upon said first and second bodies being fully coupled.

7. A coupling as claimed in claim 6, characterized in that said first and second bodies (10, 10') and equivalent components are identical in all respects, said third locking means (68') being identical to said first locking means (68) and said fourth (75) locking means being identical to said second locking means (75'), said first and second ball valves both needing to be open to permit flow through the coupling.

8. A coupling as claimed in any preceding claim, characterized by an annular bearing (34) concentrically located within said body passage (16) for axial displacement therein engaging said ball valve spherical surface (24) on the opposite side thereof with respect to said valve seat (20), and a spring (36) biasing said bearing toward said ball valve and valve seat.

**Patentansprüche**

1. Kupplung, die in einer Kombination umfaßt: einen ersten ringförmigen Körper (10) mit einem darin abgegrenzten, eine Längsachse aufweisenden Durchgang (16) und mit einem leitungsseitigen Ende zur Verbindung mit einer Leitung (28) sowie mit einem kupplungsseitigen Ende, wobei der Durchgang das leitungsseitige sowie das kupplungsseitige Ende verbindet, einen im Durchgang drehbar aufgenommenen Kugelhahn (22) mit einer kugelförmigen Außenfläche (24) sowie einer den Kugelhahn durchsetzenden diametralen Bohrung (26), ein am Kugelhahn angebrachtes, durch den Körper sich erstreckendes Kugelhahn-Betätigungselement (42) zur Drehung des Kugelhahns in ausgewählter Weise zwischen einer Offenstellung, in der die Bohrung mit der Achse des Durchgangs ausgerichtet ist, und einer Schließstellung, in der die Bohrung quer zur Achse des Durchgangs angeordnet ist, einen ringförmigen, zur Achse des Durchgangs konzentrischen und in diesem befindlichen Ventilsitz (20), der dichtend an der Kugelhahn-Außenfläche anliegt, ein erstes, an dem ersten kupplungsseitigen Ende bestimmtes Kupplungseingriffsteil (52), einen zweiten ringförmigen Körper (10') mit einem darin abgegrenzten Durchgang (16') und mit einem leitungsseitigen Ende zur Verbindung mit einer Leitung (28') sowie mit einem kupplungsseitigen Ende, wobei der zweite Durchgang das leitungsseitige sowie das kupplungsseitige Ende des zweiten Körpers verbindet, und ein zweites, an dem zweiten kupplungsseitigen Ende des zweiten Körpers bestimmtes, zum ersten Kupplungseingriffsteil (52) komplementär ausgestaltetes sowie mit diesem zu einem völlig gekuppelten Zustand, in dem die Durchgänge im ersten und zweiten Körper miteinander fluchten, verbindbares Kupplungseingriffsteil (52'), dadurch gekennzeichnet, daß das Kugelhahn-Betätigungselement (42) ein von außerhalb des Körpers zugängliches, handbetätigtes Griffstück (48) aufweist, daß am ersten Körper getrennt vom Kupplungseingriffsteil eine erste Sicherungseinrichtung (68) angeordnet ist, die mit dem Kugelhahn-Betätigungselement (42) für eine ausgewählte Bewegung jeweils zwischen einer ersten sowie zweiten Stellung bei einer Drehung des Kugelhahns zwischen der Offen- und der Schließstellung in Wirkverbindung (bei 74) steht, daß am zweiten Körper (10') getrennt vom Kupplungseingriffsteil eine zweite Sicherungseinrichtung (75') angeordnet ist, die mit der ersten Sicherungseinrichtung (68) fluchtet und diese im völlig gekuppelten Zustand des ersten sowie zweiten Kupplungseingriffsteils aufnehmen kann, wobei die erste Sicherungseinrichtung von der zweiten in die erste Stellung verschiebbar ist, um eine Drehung des Kugelhahns aus der Schließstellung in die Offenstellung lediglich im völlig gekuppelten Zustand des ersten sowie zweiten Körpers zuzulassen, daß das kupplungsseitige Ende des ersten Körpers eine zur Achse des diesen durchsetzenden Durchgangs rechtwinklige, ebene Dichtungsfläche (54) aufweist und daß die kugelförmige Außenfläche (24) in der Schließstellung des Kugelhahns im wesentlichen tangential zur Dichtungsfläche (54) liegt, um das Volumen von der Dichtungsfläche benachbarten Hohlräumen innerhalb des Durchgangs des ersten Körpers zu minimieren.

2. Kupplung nach Anspruch 1, dadurch gekennzeichnet, daß an den kupplungsseitigen Enden des ersten sowie zweiten Körpers Ringdichtungen (66, 66') angeordnet sind, die im völlig gekuppelten Zustand miteinander in Anlage sind.

3. Kupplung nach Anspruch 1 oder 2, dadurch gekennzeichnet, daß das erste sowie zweite Kupplungseingriffsteil jeweils eine bogenförmige, hinterschnittene Kehle (60) und einen bogenförmigen Kupplungskopf (56) mit einem Hakenteil, das sich in die Kehle erstrecken sowie mit Bezug zu dieser um die Achse des Durchgangs im ersten Körper zur Bildung einer Bajonettverbindung gedreht werden kann, aufweist.

4. Kupplung nach einem der vorhergehenden Ansprüche, dadurch gekennzeichnet, daß die erste Sicherungseinrichtung einen am ersten Körper (10) verschiebbar gelagerten, zum axialen Heraustreten aus dem kupplungsseitigen Ende des ersten Körpers in der ersten Stellung der ersten Sicherungseinrichtung in axialer Richtung des Durchgangs im ersten Körper bewegbaren Sperrstift (68) und die zweite Sicherungseinrichtung eine im kupplungsseitigen Ende des zweiten Körpers angeordnete, den Sperrstift aufnehmende Vertiefung (75') umfaßt.

5. Kupplung nach Anspruch 4, gekennzeichnet durch eine am Kugelhahn-Betätigungselement (42) abgegrenzte Kurvenfläche (76), mit der der Sperrstift (68) in Wirkverbindung steht, so daß eine Betätigung des Kugelhahn-Betätigungselements durch das Griffstück (48) den Sperrstift in ausgewählter Weise in seine erste und zweite Stellung verlagert.

6. Kupplung nach einem der vorhergehenden Ansprüche, dadurch gekennzeichnet, daß im Durchgang (16') des zweiten Körpers (10') ein zweiter Kugelhahn (22') mit einer kugelförmigen Außenfläche sowie einer diesen durchsetzenden diametralen Bohrung drehbar gelagert ist, daß sich ein am zweiten Kugelhahn angebrachtes Kugelhahn-Betätigungselement (42') aus dem zweiten Körper heraus erstreckt sowie ein von außerhalb des zweiten Körpers zugängliches, von Hand betätigtes Griffstück (48') aufweist, um den zweiten Kugelhahn mit Bezug zum Durchgang im zweiten Körper zwischen einer Offen- sowie Schließstellung in ausgewählter Weise zu drehen, daß an der Außenfläche des zweiten Kugelhahns ein im zweiten Durchgang befindlicher ringförmiger Ventilsitz (20') anliegt, daß eine am zweiten Körper angebrachte dritte Sicherungseinrichtung (68') mit dem zweiten Kugelhahn-Betätigungselement (42') für eine ausgewählte Bewegung zwischen jeweils einer ersten sowie zweiten Stellung bei Drehung des zweiten Kugelhahns zwischen der Offen- sowie Schließstellung angebracht ist und daß eine am ersten Körper vorgesehene vierte Sicherungseinrichtung (75) zur Ausrichtung mit der dritten Sicherungseinrichtung gebracht werden und diese im völlig gekuppelten Zustand des ersten sowie zweiten Kupplungseingriffsteils aufnehmen kann, wobei eine Verschiebung der dritten Sicherungseinrichtung aus ihrer zweiten in die erste Stellung möglich ist, um eine Drehung des zweiten Kugelhahns aus seiner geschlossenen in die offene Stellung lediglich im völlig gekuppelten Zustand des ersten sowie zweiten Körpers zuzulassen.

7. Kupplung nach Anspruch 6, dadurch gekennzeichnet, daß der erste sowie zweite Körper (10, 10') und gleichwertige Teile in allen Beziehungen einander identisch sind, daß die dritte Sicherungseinrichtung (68') der ersten Sicherungseinrichtung (68) und die vierte Sicherungseinrichtung (75) der zweiten Sicherungseinrichtung (75') gleich ist und daß der erste sowie zweite Kugelhahn beide für eine Flüssigkeitsströmung durch die Kupplung in der Öffnungsstellung sein müssen.

8. Kupplung nach einem der vorhergehenden Ansprüche, gekennzeichnet durch ein konzentrisch innerhalb des Durchgangs (16) des Körpers angeordnetes, darin axial verschiebbares ringförmiges Lager (34), das mit Bezug zum Ventilsitz (20) auf der entgegengesetzten Seite des Kugelhahns mit dessen Kugelfläche (24) in Anlage ist, und durch eine dieses Lager zum Kugelhahn sowie zum Ventilsitz hin belastende Feder (36).

**Revendications**

1. Raccord comprenant, en association, un premier corps annulaire (10) dans lequel est défini un passage (16) ayant un axe longitudinal, ledit corps ayant une extrémité de connexion de conduit pour communiquer avec un conduit (28) et une extrémité de couplage, ledit passage communiquant avec lesdites extrémités de connexion de conduit et de couplage, une vanne à boulet (22) installée de façon à pouvoir tourner à l'intérieur dudit passage, ladite vane à boulet comprenant une surface sphérique extérieure (24) et un alésage diamétral (26) traversant ladite vanne, un dispositif de commande de vanne (42) fixé à ladite vanne à boulet et traversant ledit corps pour faire tourner de façon sélective ladite vanne à boulet entre une position ouverte dans laquelle ledit alésage est en alignement avec ledit passage axial et une position fermée dans laquelle ledit alésage est disposé transversalement par rapport audit passage axial, un siège annulaire de vanne (20) à l'intérieur dudit passage, concentrique avec ledit passage axial, s'engageant de façon étanche avec ladite surface extérieure de la vanne à boulet, un premier moyen de fixation de racord (52) défini sur ladite première extrémité de couplage du corps, un second corps annulaire (10') dans lequel est défini un passage (16') ayant un axe longitudinal, ledit second corps ayant une extrémité de connexion de conduit pour communiquer avec un conduit (28') et une extrémité de couplage, ledit passage du second corps communiquant avec lesdites extrémités de connexion de conduit et de couplage du second corps, des seconds moyens de fixation de couplage (52') définis sur ladite extrémité de couplage de second corps avec une configuration complémentaire à celle desdits premiers moyens de fixation de couplage (52) et pouvant être connectée avec eux en une condition de couplage total pour aligner lesdits passages dudit premier et dudit second corps, caractérisé par le fait que le dispositif de commande (42) porte une poignée (48) manoeuvrable à la main, accessible de l'extérieur dudit corps, un premier moyen de verrouillage (68) distinct du moyen de fixation de couplage prévu sur ledit premier corps et fonctionnellement relié (en 74) audit dispositif de commande de vanne (42) pour effectuer un mouvement sélectif entre la première et la seconde position par rotation de ladite vanne à boulet entre les positions ouvertes et fermées, respectivement, un second moyen de verrouillage distinct du moyen de couplage (75') installé sur ledit second corps (10') et disposé pour être aligné avec ledit premier moyen de verrouillage (68) et être capable de le recevoir au moment où le premier et le second moyens de couplage sont en condition complètement couplée de façon que ledit premier moyen de verrouillage soit décalé de la seconde position à ladite première position pour permettre à ladite vanne à boulet de tourner de ladite position fermée à ladite position ouverte uniquement lorsque lesdits premier et second corps sont complètement couplés, ladite extrémité de couplage du premier corps possède une surface d'étanchéité plate (54) orientée perpendiculairement à l'axe dudit passage du premier corps, et ladite surface sphérique extérieure de la vanne (24) est sensiblement tangentielle à ladite surface d'étanchéité (54) guand ladite vanne à boulet est dans ladite position fermée de façon à réduire au minimum le volume des vides à l'intérieur dudit passage du premier corps adjacent à ladite surface d'étanchéité.

2. Raccord selon la revendication 1, caractérisé par le fait que des garnitures annulaires (66, 66') sont prévues sur lesdites extrémités de couplage dudit premier et dudit second corps pour s'engager ensemble lorsque lesdits corps sont complètement couplés.

3. Raccord selon la revendication 1 ou 2, caractérisé par le fait que lesdits premier et second moyens de fixation de couplage comprennent chacun une rainure bordée cintrée (60) et une saillie à tête cintrée (56), la saillie étant adaptée à s'étendre à l'intérieur de la rainure et à être tournée par rapport à elle autour de l'axe dudit passage du premier corps pour assurer une connexion du type à baïonnette.

4. Raccord selon l'une quelconque des revendications précédentes, caractérisé par le fait que ledit premier moyen de verrouillage comprend un ergot à clique (68) supporté de manière coulissante par ledit premier corps (10) pour être mobile dans la direction axiale du passage dudit premier corps afin de se prolonger dans la direction axiale depuis ladite extrémité de couplage du premier corps dans ladite première position dudit premier moyen de verrouillage, et que ledit second moyen de verrouillage comprend un évidement (75') défini dans ladite extrémité de couplage du second corps pour recevoir ledit ergot à cliquet.

5. Raccord selon la revendication 4, caractérisé par le fait qu'il comprend une surface de came (76) définie sur ledit dispositif de commande de vanne (42), ledit ergot à cliquet (68) étant fonctionnellement associé à ladite surface de came de façon que la manoeuvre dudit dispositif de commande de vanne par ladite poignée (48) positionne de façon sélective ledit ergot à cliquet dans ses première et seconde positions.

6. Raccord selon l'une quelconque des revendications précédentes, caractérisé par le fait qu'une seconde vanne à boulet (22') est montée de façon à pouvoir tourner à l'intérieur dudit passage (16') dudit second corps (10') et comprend une surface sphérique extérieure et un alésage diamétral qui la traverse, un dispositif de commande de vanne (42') fixé à ladite seconde vanne à boulet traversant ledit second corps et ayant une poignée pour manoeuvre manuelle (48') accessible à l'extérieur dudit second corps afin de faire tourner de façon sélective ladite seconde vanne à boulet entre des positions ouverte et fermée par rapport audit passage du second corps, un siège annulaire de vanne (20') à l'intérieur dudit passage du second corps s'engageant de façon étanche avec ladite surface extérieure de la seconde vanne à boulet, un troisième moyen de verrouillage (68') installé sur ledit second corps et fonctionnellement connecté audit dispositif de commande de la seconde vanne à boulet (42') pour effectuer un mouvement sélectif entre la première et la seconde position au moment de la rotation de ladite second vanne à boulet entre lesdites positions ouverte et fermée, respectivement, et un quatrième moyen de verrouillage (75) prévu sur ledit premier corps et conçu pour être aligné avec ledit troisième moyen de verrouillage et à le recevoir au moment où lesdits premier et second moyens de fixation de couplage sont en condition complètement couplée en permettant audit troisième moyen de verrouillage d'être décalé de sa seconde position à sa première position afin que ladite seconde vanne à boulet puisse être tournée de sa position fermée à sa position ouverte uniquement lorsque lesdits premier et second corps sont complètement couplés.

7. Raccord selon la revendication 6, caractérisé par le fait que lesdits premier et second corps (10, 10') et les composants équivalents sont identiques sous tous les aspects, en ce que ledit troisième moyen de verrouillage (68') est identique audit premier moyen de verrouillage (68) et ledit quatrième moyen de verrouillage (75) est identique audit second moyen de verrouillage (75'), lesdites première et seconde vannes à boulet nécessitant toutes deux d'être ouvertes pour permettre l'écoulement à travers le raccord.

8. Raccord selon l'une quelconque des revendications précédentes, caractérisé par le fait qu'il comprend un palier annulaire (34) disposé de manière concentrique à intérieur dudit passage du corps (16) pour se déplacer dans la direction axiale à l'intérieur en venant en contact avec ladite surface sphérique (24) de la vanne à boulet du côté opposé de celle-ci par rapport audit siège de vanne (20) et un ressort (36) poussant ledit palier vers ladite vanne à boulet et ledit siège de vanne.

FIG. 1

FIG.2

FIG. 3

FIG 4

0 122 987